# EUROPEAN PATENT APPLICATION

(11) **EP 2 642 583 A1**
(43) Date of publication of application: **25.09.2013**
(21) Application number: 13170789.5
(22) Date of filing: 17.02.2011
(51) Int. Cl.: H01M 10/44, H02J 7/00, H01M 10/0525, H01M 4/505

(54) **Charging and discharging method for lithium ion secondary batteries and charging and discharging system for the same**

(30) Priority: 23.03.2010 JP 2010066107
(62) Divisional of application: 11759102.4
(71) Applicant: NEC Corporation, Minato-ku, Tokyo 108-8001 (JP)
(72) Inventor: HONGO, Hiroo, Minato-ku,, Tokyo 108-8001 (JP); KUDO, Koji, Minato-ku,, Tokyo 108-8001 (JP); SAKUMA, Hisato, Minato-ku,, Tokyo 108-8001 (JP); KURIBAYASHI, Ryosuke, Minato-ku,, Tokyo 108-8001 (JP)
(74) Representative: Glawe, Delfs, Moll

(57) **Abstract**

A first threshold that is lower than a progressively deteriorating SOC that is an SOC in which a battery performance of the lithium ion secondary battery deteriorates when the lithium ion secondary battery is stored and a second threshold that is greater than the progressively deteriorating SOC are preset. A computer controls a switch provided between electric wires and the lithium ion secondary battery, an electric power supply source that supplies electric power necessary to charge the lithium ion secondary battery and a load that consumes electric power discharged from the lithium ion secondary battery are connected to the electric wires, such that a charging operation for the lithium ion secondary battery is continued from the first threshold to the second threshold when the lithium ion secondary battery is charged based on value of the SOC of the lithium ion secondary battery, the value of the SOC is transmitted from a monitor device that detects the value of the SOC of the lithium ion secondary battery and that controls the switch such that a discharging operation for the lithium ion secondary battery is continued from the second threshold to the first threshold when the lithium ion secondary battery is discharged.

## Description

### TECHNICAL FIELD

The present invention relates to a charging and discharging method for lithium ion secondary batteries having a manganese positive polarity material and a charging and discharging system for the same.

### BACKGROUND ART

Since lithium ion secondary batteries that bind and give off lithium ions have advantages such as high energy densities, high operating voltages, and so forth over nickel cadmium (Ni-Cd) batteries and nickel metal hydride (Ni-MH) batteries of the same capacities, they have been widely used for information processing devices and communication devices such as personal computers and mobile phones that require miniaturization and lightweightness.

Moreover, in recent years, lithium ion secondary batteries have been assessed to be usable as power supplies for electric bicycles, hybrid automobiles, and so forth and also they are being introduced as batteries that store electric power generated by renewable power supplies such as solar batteries to accomplish a low-carbon society that solves global warming problems.

To enable the widespread use of lithium ion secondary batteries as electric power storage and as a high capacity power supply for electric automobiles, it is necessary to reduce the maintenance cost as well as manufacturing cost, thereby to prolong their product lives.

Although it is thought that the product life of lithium ion secondary batteries can be extended by re-evaluating the materials that comprise them and the structure of the batteries, there is a method that can reduce the shortening of their product life cycles that is caused by inappropriate usage of the battery and so forth. For example, Patent Literature 1 and Patent Literature 2 propose techniques that reduce the shortening of the life cycles of lithium ion secondary batteries by controlling charging and discharging of these batteries.

Patent Literature 1 presents that charging and discharging of a lithium ion secondary battery are controlled such that the number of lithium ions that migrate between a positive electrode material and a negative electrode active material when the lithium ion secondary battery is charged or discharged is 95 % or less of the number of lithium ions that migrate in the reverse direction. On the other hand, Patent Literature 2 presents that charging and discharging of a lithium ion secondary battery are controlled such that the end-of-discharge voltage when the lithium ion secondary battery is discharged ranges from 3.2 to 3.1 V and such that the upper limit voltage when the lithium ion secondary battery is charged ranges from 4.0 to 4.5 V.

As positive electrode materials (positive electrode active materials) of lithium ion secondary batteries, compositions using lithium cobalt oxide, lithium manganese oxide, and lithium nickel oxide are known. As negative electrode materials (negative electrode active materials), compositions using graphites and cokes are known.

The applicant of the present patent application discovered that when a manganese lithium ion secondary battery having lithium manganese oxide that is used for the positive electrode material of various types of lithium ion secondary batteries is stored in a particular SOC (State of Charge), the battery performance quickly deteriorates.

In this context, SOC represents the ratio of the capacity of the lithium ion secondary battery to the amount of electric charge. The particular SOC in which the battery performance quickly deteriorates is less than the maximum SOC that is the charging limit point and greater than the minimum SOC that is the discharging limit point, for example SOC = 40 %. In addition, "store" in the specification of the present patent application denotes that a lithium ion secondary battery is kept in the state of a particular voltage of the SOC.

The phenomenon in which the battery performance deteriorates in the particular SOC is not significantly related to a case in which the lithium ion secondary battery is stored in the fully charged state, for example, when it is used for a UPS (Uninterruptable Power Supply).

However, in an application where a lithium ion secondary battery is stored in any SOC between the maximum SOC and the minimum SOC, for example in an application where electric power generated by the above-described renewable power supply is stored, the lithium ion secondary battery can be understood as being kept in the above-described particular SOC. In such a case, the battery performance of the lithium ion secondary battery will quickly deteriorate.

### RELATED ART LITERATURE

### PATENT LITERATURE

Patent Literature 1: Japanese Patent Laid-Open No 2000-030751
Patent Literature 2: Japanese Patent Laid-Open No 2001-307781

### SUMMARY

Therefore, an object of the present invention is to provide a charging and discharging method for manganese lithium ion secondary batteries and a charging and discharging system for the same that can reduce a shortening of the life cycle of manganese lithium ion secondary batteries when they are stored.

To accomplish the above-described object, a charging and discharging method for lithium ion secondary batteries according to an exemplary aspect of the present invention is a charging and discharging method for lithium ion secondary batteries having manganese positive electrode material, the method comprising the steps of:
causing a computer to store a preset first threshold that is lower than a progressively deteriorating SOC that is an SOC in which a battery performance of said lithium ion secondary battery deteriorates when the lithium ion secondary battery is stored and a preset second threshold that is greater than said progressively deteriorating SOC;
causing said computer to control a switch provided between electric wires and said lithium ion secondary battery, an electric power supply source that supplies electric power necessary to charge said lithium ion secondary battery and a load that consumes electric power discharged from said lithium ion secondary battery being connected to said electric wires, such that a charging operation for said lithium ion secondary battery is continued from said first threshold to said second threshold when said lithium ion secondary battery is charged based on value of the SOC of said lithium ion secondary battery, the value of the SOC being transmitted from a monitor device that detects the value of the SOC of said lithium ion secondary battery; and
causing said computer to control said switch such that a discharging operation for said lithium ion secondary battery is continued from said second threshold to said first threshold when said lithium ion secondary battery is discharged.

On the other hand, a charging and discharging system according to an exemplary aspect of the present invention is a charging and discharging system that controls charging and discharging for lithium ion secondary batteries having manganese positive electrode material, comprising:
a monitor device that detects SOCs of said lithium ion secondary batteries;
switches that connect or disconnect electric wires and said lithium ion secondary batteries, a power supply source that supplies electric power necessary to charge said lithium ion secondary batteries and a load that consumes electric power discharged from said lithium ion secondary batteries that is connected to said electric wires; and
an information processing device that stores a preset first threshold that is lower than a progressively deteriorating SOC that is an SOC in which battery performance of said lithium ion secondary batteries deteriorates when the lithium ion secondary batteries are stored and a preset second threshold that is greater than said progressively deteriorating SOC and controls said switches such that a charging operation for said lithium ion secondary batteries is continued from said first threshold to said second threshold when said lithium ion secondary batteries are charged and that a discharging operation for said lithium ion secondary batteries is continued from said second threshold to said first threshold when said lithium ion secondary batteries are discharged based on values of the SOCs of said lithium ion secondary batteries, the values of the SOCs being detected by said monitor device.

### BRIEF DESCRIPTION OF DRAWINGS

[Fig. 1]

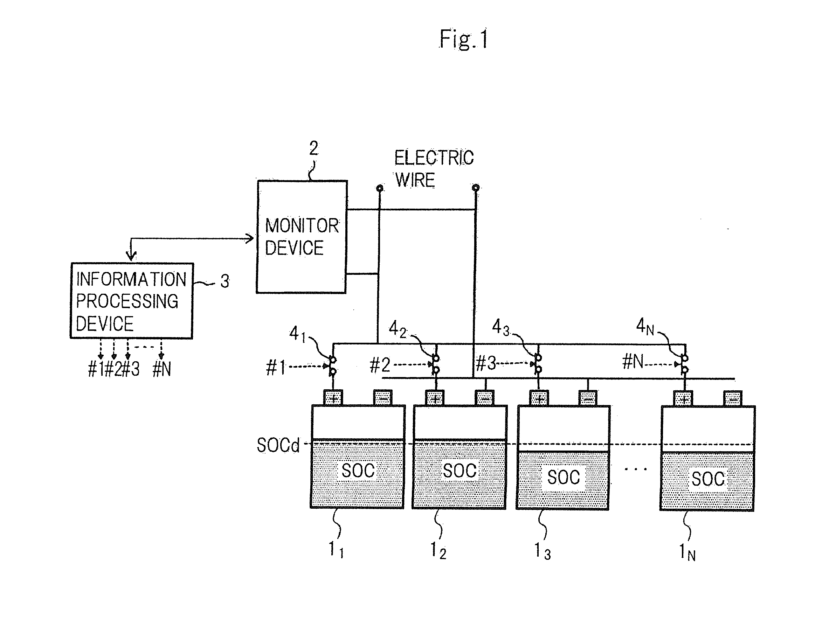

   Fig. 1 is a block diagram exemplifying a charging and discharging system according to a first exemplary embodiment.
[Fig. 2]

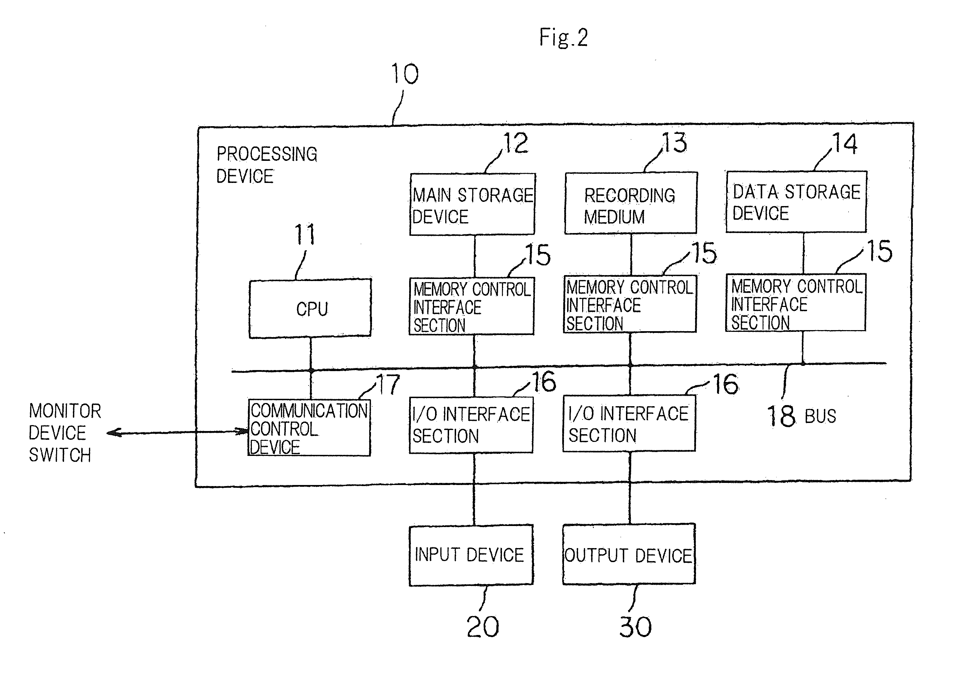

   Fig. 2 is a block diagram exemplifying an information processing device shown in Fig. 1.
[Fig. 3]

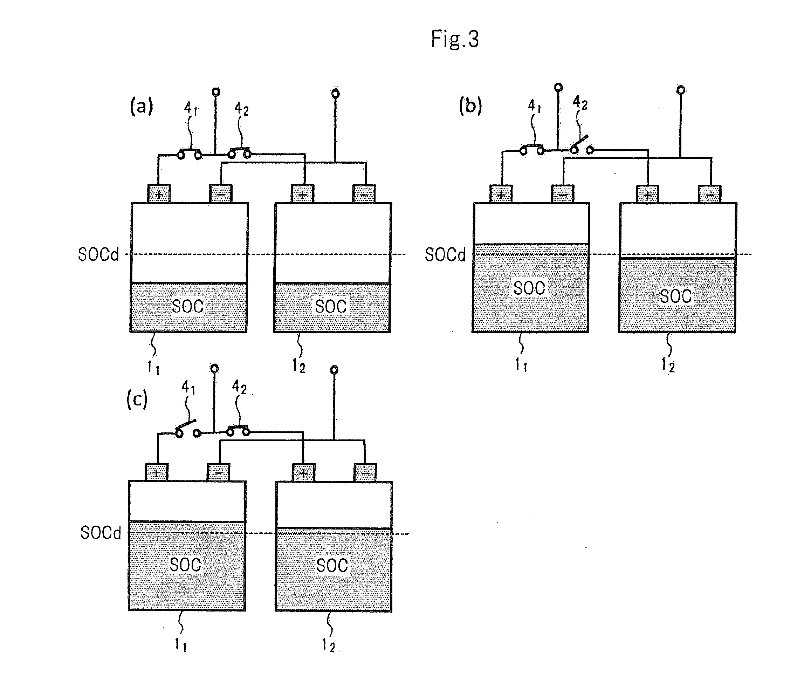

   Fig. 3 is a schematic diagram showing a controlling method performed by the charging and discharging system according to the first exemplary embodiment.
[Fig. 4]

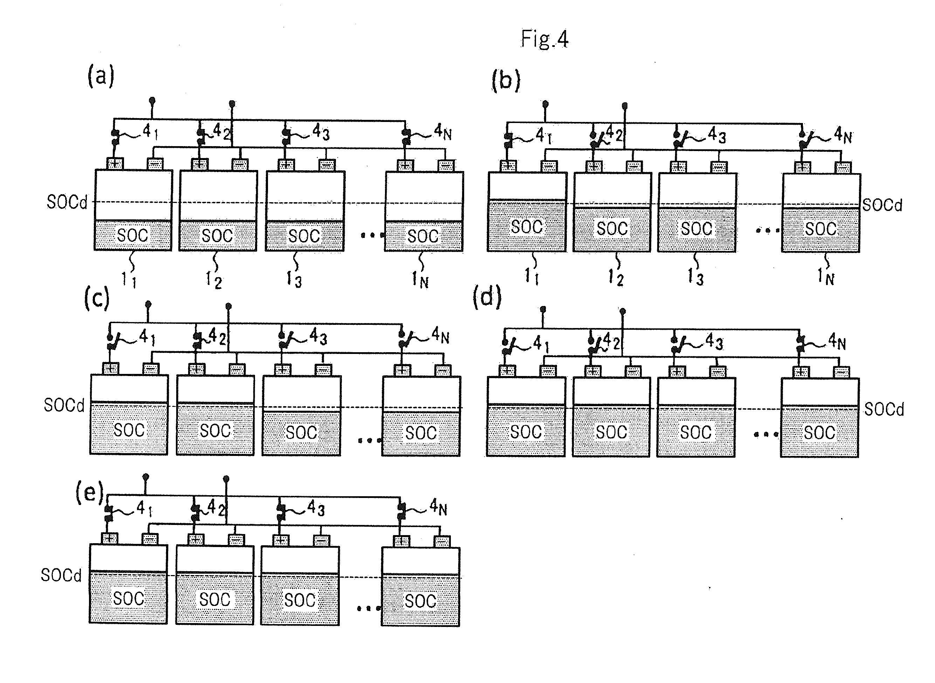

   Fig. 4 is a schematic diagram showing the controlling method performed by the charging and discharging system according to the first exemplary embodiment.
[Fig. 5]

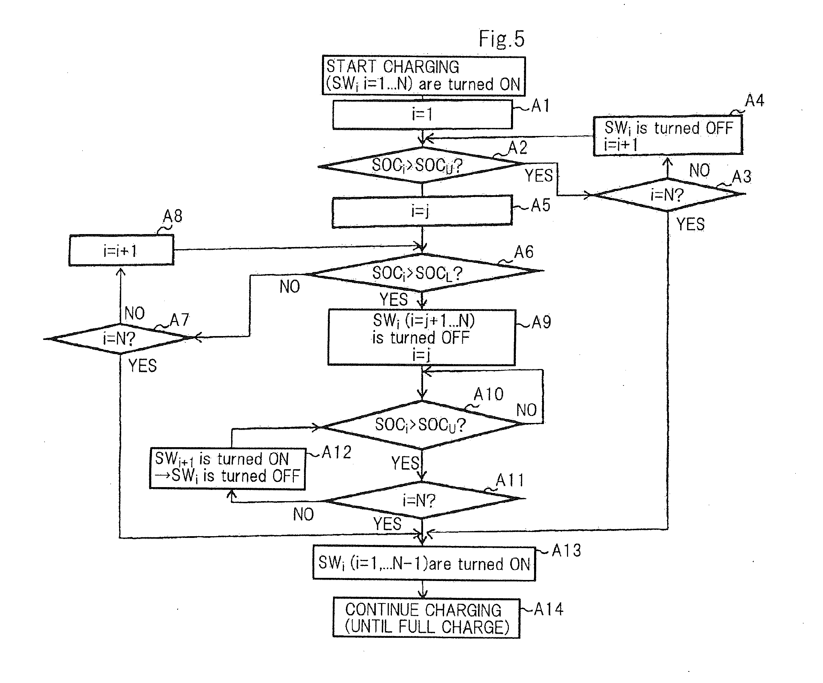

   Fig. 5 is a flow chart exemplifying a charging procedure of a charging and discharging method based on which lithium ion secondary batteries are charged according to the first exemplary embodiment.
[Fig. 6]

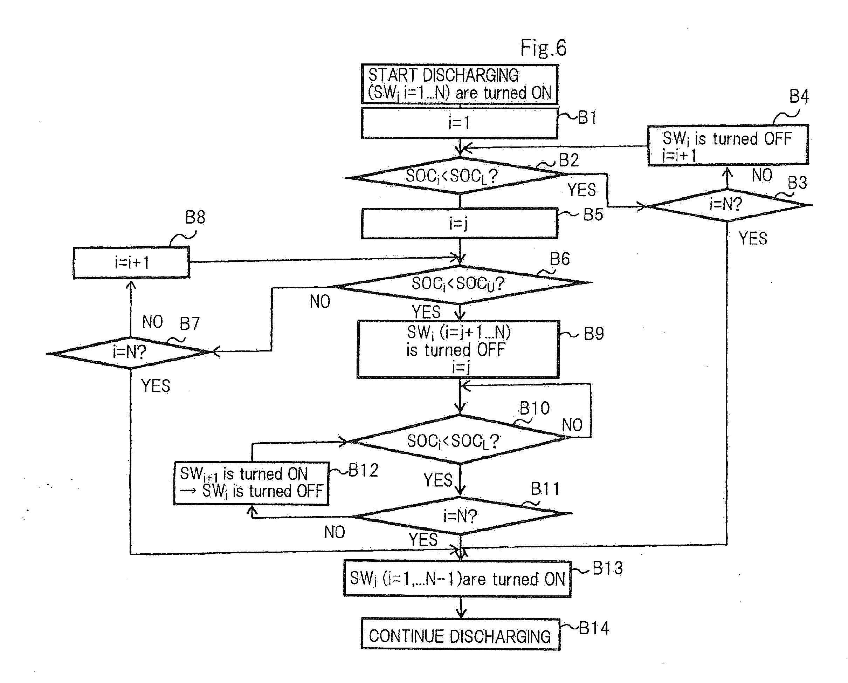

   Fig. 6 is a flow chart exemplifying a discharging procedure of the charging and discharging method based on which the lithium ion secondary batteries are discharged according to the first exemplary embodiment.
[Fig. 7]

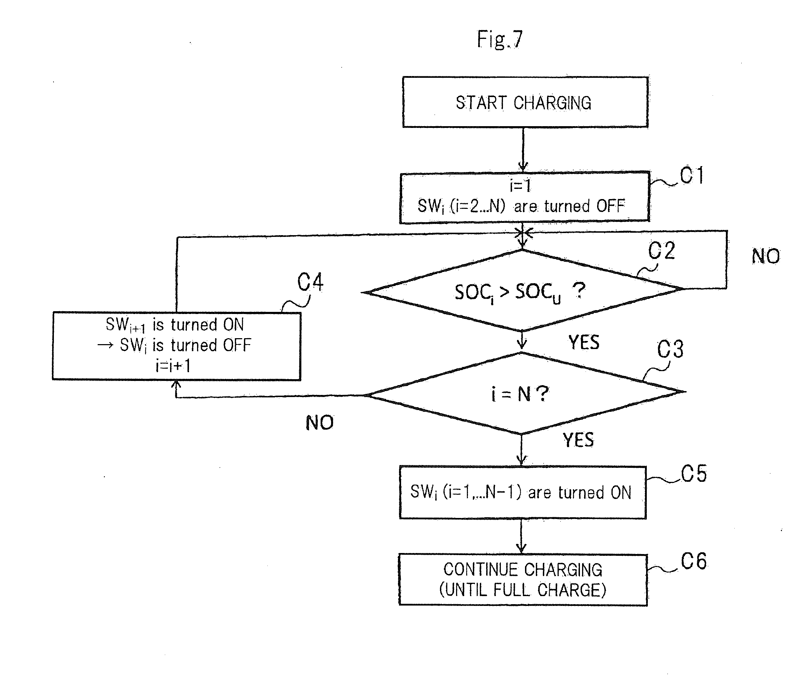

   Fig. 7 is a flow chart further exemplifying the charging procedure of the charging and discharging method based on which the lithium ion secondary batteries are charged according to the first exemplary embodiment.
[Fig. 8]

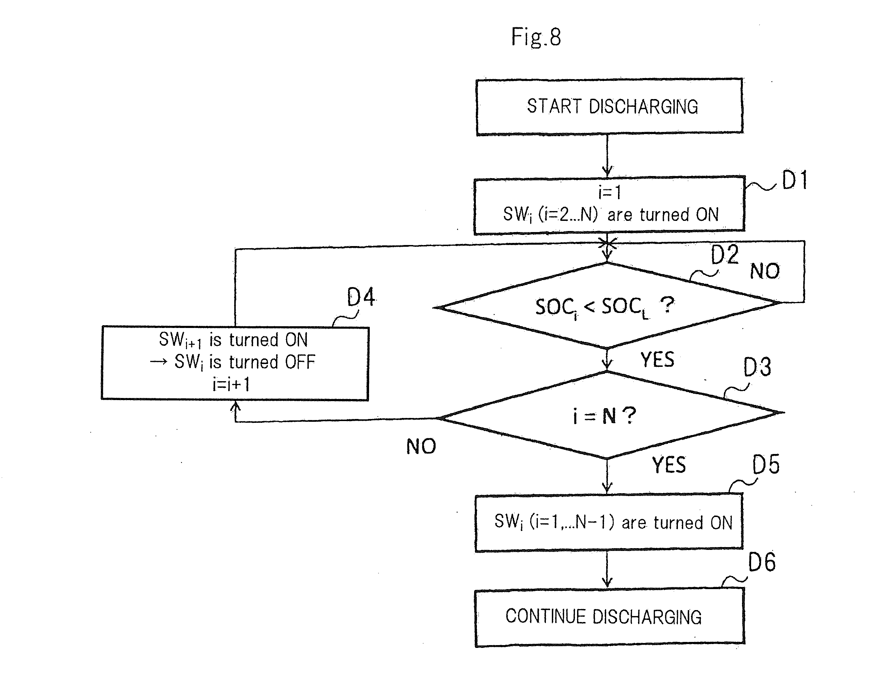

   Fig. 8 is a flow chart further exemplifying the discharging procedure of the charging and discharging method based on which the lithium ion secondary batteries are discharged according to the first exemplary embodiment.
[Fig. 9]

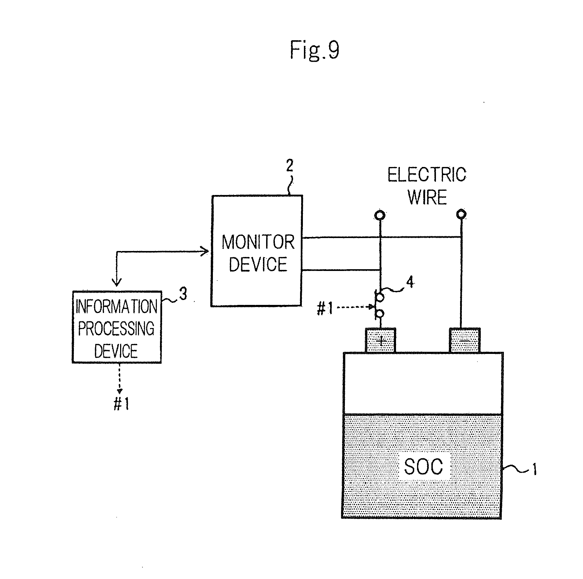

   Fig. 9 is a block diagram exemplifying a charging and discharging system according to a second exemplary embodiment.

### EXEMPLARY EMBODIMENT

Next, with reference to drawings, the present invention will be described.

### (First Exemplary Embodiment)

Fig. 1 is a block diagram exemplifying a charging and discharging system according to the first exemplary embodiment, whereas Fig. 2 is a block diagram exemplifying an information processing device shown in Fig. 1.

As shown in Fig. 1, the charging and discharging system according to the first exemplary embodiment is structured to provide N (where N is a positive integer) lithium ion secondary batteries (hereinafter simply referred to as secondary batteries) 1₁ to 1_{N} whose positive and negative electrodes are connected in parallel to corresponding electric wires), monitor device 2 that detects the values of the SOCs of individual secondary batteries 1₁ to 1_{N}, information processing device 3 that controls charging and discharging of secondary batteries 1₁ to 1_{N}, and a plurality of switches 4₁ to 4_{N} that are provided corresponding to secondary batteries 1₁ to 1_{N} and that respectively connect or disconnect secondary batteries 1₁ to 1_{N} and the electric wires.

Connected to the electric wires are an electric power supply source that supplies electric power necessary to charge the secondary batteries, for example a renewable electric power supply that an electric power user (residence or facility) provides, and a terminal voltage transformer that distributes electric power supplied from a distribution substation of an electric power company to each electric power user. In addition, a load that consumes electric power discharged from the secondary batteries, for example, one of various types of electric devices and a certain type of heat pump hot water supplier that the electric power user (residence or facility) provides and that consumes electric power.

Although Fig. 1 shows that N secondary batteries 1₁ to 1_{N} are closely arranged, they may be arranged in any manner as long as their charging and discharging can be controlled. For example, a plurality of secondary batteries (cells) 1₁ to 1_{N} may be contained in one package (battery pack) or secondary batteries 1₁ to 1_{N} may be distributed for electric power storage of individual electric power users (residences or facilities) who live or that exist in remote areas. If secondary batteries 1₁ to 1_{N} are distributed separately from each other, a connection between information processing device 3 and monitor device 2 and connections between information processing device 3 and switches 4₁ to 4_{N} can be made through a known information communication means such that information, commands and so forth can be transmitted and received. As the information communication means, a known wireless communication means or a known wired communication means can be used. The wireless communication means can be considered appropriate for a known Zigbee wireless system that uses for example a 950 MHz band radio frequency. The wired communication means can be considered appropriate for a known PLC (Power Line Communication) system that transmits and receives information through electric wires. The charging and discharging system according to this exemplary embodiment can be connected to any system as long as this system can supply predetermined electric power to secondary batteries 1₁ to 1_{N} when these batteries are charged and supply electric power to one of various types of electric devices (load) when these batteries are discharged.

As described above, secondary batteries 1₁ to 1_{N} are manganese lithium ion secondary batteries. Manganese lithium ion secondary batteries are batteries whose positive electrode materials are mainly lithium manganese oxide (LiₓMn_{y}O_{z}: x is around 1 or around 0.65 or around 0.1 to 0.5; y is around 2; z is around 4). However, the compositional ratio of Li, Mn, and O is not limited to those values. In addition, the positive electrode material may contain various types of substances such as Al, Mg, Cr, Fe, Co, Ni, and Cu as long as the positive electrode material is mainly lithium manganese oxide.

Dotted lines over secondary batteries 1₁ to 1_{N} shown in Fig. 1 represent the particular SOCs in which the performance of secondary batteries 1₁ to 1_{N} quickly deteriorates when they are stored (hereinafter referred to as the progressively deteriorating SOC_{d}). On the other hand, solid lines over secondary batteries 1₁ to 1_{N} shown in Fig. 1 schematically represent the quantity of stored electricity compared to the capacities of secondary batteries 1₁ to 1_{N}. Those legends apply to dotted lines and solid lines of secondary batteries shown in Fig. 3, Fig. 4, and Fig. 7. Although Fig. 1 exemplifies that the capacities of secondary batteries 1₁ to 1_{N} are the same, they may differ from each other.

Switches 4₁ to 4_{N} are for example MOSFETs (Metal Oxide Semiconductor Field Effect Transistors) that can turn on/off relatively large amounts of electric power and that can be easily controlled. Switches 4₁ to 4_{N} are connected to information processing device 3 that controls on/off of switches 4₁ to 4_{N}. Switches 4₁ to 4_{N} are provided with driving circuits that turn on/off their contacts. Switches 4₁ to 4_{N} may be arranged in the vicinity of secondary batteries 1₁ to 1_{N} or information processing device 3. The contacts of switches 4₁ to 4_{N} are not necessary to be integrated with their driving circuits; instead, the contacts may be arranged in the vicinity of secondary batteries 1₁ to 1_{N} and the driving circuits may be arranged in the vicinity of information processing device 3.

Monitor device 2 can be accomplished by a known charging device or protection device that is supplied by the manufacturer or supplier of secondary batteries 1₁ to 1_{N} and that is manufactured based on the performance and characteristic of secondary batteries 1₁ to 1_{N}. Generally, the protection device detects the SOCs of individual secondary batteries 1₁ to 1_{N} and current values that are input to and output from secondary batteries 1₁ to 1_{N} ,whereas the charging device changes the charging current (constant current) and charging voltage (constant voltage) based on the SOCs and current values detected by the protection device. Normally, since the SOCs of secondary batteries 1₁ to 1_{N} nearly correspond to their output voltages, monitor device 2 may detect the output voltage values of secondary batteries 1₁ to 1_{N} instead of the SOCs. If the SOCs of secondary batteries 1₁ to 1_{N} detected by monitor device 2 are analog values, monitor device 2 may be provided with an A/D converter that converts the values of the SOCs into digital values. The A/D converter may be provided in information processing device 3. Monitor device 2 may be structured to provide N detectors that individually detect SOCs of individual secondary batteries 1₁ to 1_{N} or provide one detector that detects the values of the SOCs of secondary batteries 1₁ to 1_{N}.

Information processing device 3 receives the values of the SOCs of secondary batteries 1₁ to 1_{N} from monitor device 2 when they are charged and discharged and turns on/off switches 4₁ to 4_{N} based on the received Values of the SOCs so as to control charging and discharging of individual secondary batteries 1₁ to 1_{N}.

Information processing device 3 can be accomplished for example by a computer having the structure shown in Fig. 2. Information processing device 3 is not limited to the computer having the structure shown in Fig. 2. When information processing device 3 controls a battery pack that contains a plurality of cells, information processing device 3 can be realized by a microcomputer or the like that is composed of one or a plurality of ICs (Integrated Circuits).

The computer shown in Fig. 2 is structured to provide processing device 10 that executes a predetermined process according to a program, input device 20 that inputs commands, information, and so forth into processing device 10, and output device 30 that outputs a processed result of processing device 10.

Processing device 10 is structured to provide CPU 11, main storage device 12 that temporarily stores information that is necessary for a process that CPU 11 executes, recording medium 13 that has recorded a program that causes CPU 11 to execute a process according to the present invention, data storage device 14 that stores rating capacity, maximum SOC, and minimum SOC, first threshold SOC_{L}, second threshold SOC_{U}, and so forth of individual secondary batteries 1₁ to 1_{N}(first threshold SOC_{L}, second threshold SOC_{U} will be described later), memory control interface section 15 that controls data transferred among main storage device 12, recording medium 13, and data storage device 14, I/O interface section 16 that is an interface device between input device 20 and output device 30, and communication control device 16 that transmits and receives information and commands between monitor device 2 and switches 4₁ to 4_{N} and those devices that are connected through bus 18.

Processing device 10 executes a procedure that will be described later according to the program recorded on recording medium 13 so as to control charging and discharging of individual secondary batteries 1₁ to 1_{N}. Recording medium 13 may be a magnetic disk, a semiconductor memory, an optical disc, or another type of recording medium. On the other hand, data storage device 14 may or may not to be provided in processing device 10, it can be provided by an independent device.

Next, with reference to Fig. 3 and Fig. 4, the theory of the operation of the charging and discharging system according to this exemplary embodiment will be described.

Fig. 3(a) to (c) and Fig. 4(a) to (e) are schematic diagrams showing a controlling method performed by the charging and discharging system according to the first exemplary embodiment. Fig. 3(a) to (c) exemplify that charging and discharging of two secondary batteries 1₁ and 1₂ connected in parallel are controlled, whereas Fig. 4(a) to (e) exemplify that charging and discharging of a plurality of secondary batteries 1₁ to 1_{N} connected in parallel are controlled.

The charging and discharging system according to this exemplary embodiment controls secondary batteries 1₁ to 1_{N} such that the charging operation or discharging operation does not stop in the progressively deteriorating SOC_{d} of each of secondary batteries 1₁ to 1_{N}. Specifically, the first threshold SOC_{L} that is less than progressively deteriorating SOC_{d} of each of secondary batteries 1₁ to 1_{N} and the second threshold SOC_{U} that is greater than the progressively deteriorating SOC_{d} are pre-set. The first threshold SOC_{L} and the second threshold SOC_{U} can be preset depending on the progressively deteriorating SOC_{d} of individual secondary batteries 1₁ to 1_{N} by the manufacturer, supplier, or user thereof and can be pre-stored in data storage device 14 of information processing device 3.

According to this exemplary embodiment, two secondary batteries 1₁ and 1₂ are charged as shown in Fig. 3(a) to (c) such that two secondary batteries 11 and 12 are simultaneously charged until they reach the above-described progressively deteriorating SOC_{d}, that when the values of the SOCs of two secondary batteries 1₁ and 1₂ have reached the first threshold SOC_{L}, only secondary battery 1₁ is charged from the first threshold SOC_{L} to the second threshold SOC_{U}, then only the other secondary battery 1₂ is charged from the first threshold SOC_{L} to the second threshold SOC_{U} and then two secondary batteries 1₁ and 1₂ are simultaneously charged again.

On the other hand, two secondary batteries 1₁ and 1₂ are discharged such that they are simultaneously discharged until the values of the SOCs reach the above-described progressively deteriorating SOC_{d}, that when the values of the SOCs of two secondary batteries 1₁ and 1₂ have reached the second threshold SOC_{U}, only one secondary battery 1₁ is discharged from the second threshold SOC_{U} to the first threshold SOC_{L}, then only the other secondary battery 1₂ is discharged from the second threshold SOC_{U} to the first threshold SOC_{L}, and then two secondary batteries 1₁ and 1₂ are simultaneously discharged again.

Fig. 3(a) shows that two secondary batteries 11 and 12 are simultaneously being charged. In addition, Fig. 3(a) exemplifies that the values of the SOCs of two secondary batteries 1₁ and 1₂ that are being charged are the same. Fig. 3(b) shows that the values of the SOCs of two secondary batteries 1₁ and 1₂ have reached the first threshold SOC_{L} from the state shown in Fig. 3(a), that the charging operation for secondary battery 1₂ on the right side is stopped, and then only secondary battery 1₁ on the left side is charged to the second threshold SOC_{U}. Fig. 3(c) shows that after the state shown in Fig. 3(b), the charging operation for secondary battery 1₁ on the left side is stopped and then only secondary battery 1₂ on the right side is charged to the second threshold SOC_{U}.

On the other hand, three or more secondary batteries 1₁ to 1_{N} as shown in Fig. 4(a) to (e) are charged such that individual secondary batteries 1₁ to 1_{N} are simultaneously charged until the values of their SOCs reach the above-described progressively deteriorating SOC_{d}, that when the values of the SOCs of secondary batteries 1₁ to 1_{N} have reached the first threshold SOC_{L}, individual secondary batteries 1₁ to 1_{N} are successively charged from the first threshold SOC_{L} to the second threshold SOC_{U}, and then individual secondary batteries 1₁ to 1_{N} are simultaneously charged again.

On the other hand, three or more secondary batteries 1₁ to 1_{N} are discharged such that secondary batteries 1₁ to 1_{N} are simultaneously discharged until the values of their SOCs reach the above-described progressively deteriorating SOC_{d}, that when the values of the SOCs of secondary batteries 1₁ to 1_{N} have reached the second threshold SOC_{U}, individual secondary batteries 1₁ to 1_{N} are successively discharged from the second threshold SOC_{U} to the first threshold SOC_{L}, and then individual secondary batteries 1₁ to 1_{N} are simultaneously discharged again.

Fig. 4(a) shows that a plurality of secondary batteries 1₁ to 1_{N} are being simultaneously charged. In addition, Fig. 4(a) exemplifies that the values of the SOCs of individual secondary batteries 1₁ to 1_{N} that are being charged are the same. Fig. 4(b) shows that after the state shown in Fig. 4(a), the values of the SOCs of individual secondary batteries 1₁ to 1_{N} have reached the first threshold SOC_{L}, the charging operation for all secondary batteries 1₂ to 1_{N} other than secondary battery 1₁ on the leftmost side is stopped, and that then only secondary battery 1₁ on the leftmost side is charged until the value of the SOC reaches the second threshold SOC_{U}. Fig. 4(c) shows that after the state shown in Fig. 4(b), the charging operation for all secondary batteries 1₁ and 1₃ to 1_{N} other than secondary battery 1₂ at the second leftmost position is stopped, and that then only secondary battery 1₂ at the second leftmost position is charged until the value of the SOC reaches the second threshold SOC_{U}. Fig. 4(d) shows that after the state shown in Fig. 4(c), the charging operation for all secondary batteries 1₁ to 1_{N - 1} other than secondary battery 1_{N} on the rightmost side is stopped and that then only secondary battery 1_{N} on the rightmost side is charged until the value of the SOC reaches the second threshold SOC_{U}. Fig. 4(e) shows that after the state shown in Fig. 4(d), the charging operation for individual secondary batteries 1₁ to 1_{N} is simultaneously started again.

As shown in Fig. 3(a) to (c) and Fig. 4(a) to (e), the charging operation and discharging operation for individual secondary batteries 1₁ to 1_{N} can be controlled by causing switches 4₁ to 4_{N} to connect or disconnect the electric wires and secondary batteries 1₁ to 1_{N}.

Although the above description, Fig. 3(a) to (c), and Fig. 4(a) to (e) exemplify that when the charging operation and discharging operation are started, the values of the SOCs of individual secondary batteries 1₁ to 1_{N} are the same, when the charging operation and discharging operation are started, the values of the SOCs of individual secondary batteries 1₁ to 1_{N} may be different from each other. In this case, in the order that the values of the SOCs of secondary batteries 1₁ to 1_{N} have reached the first threshold SOC_{L}, they can be successively charged from the first threshold SOC_{L} to the second threshold SOC_{U}. Likewise, in the order that the values of the SOCs of secondary batteries 1₁ to 1_{N} have reached the second threshold SOC_{U}, they can be successfully discharged from the second threshold SOC_{U} to the first threshold SOC_{L}.

Although the above description, Fig. 3(a) to (c), and Fig. 4(a) to (e) exemplify that the first threshold SOC_{L} and the second threshold SOC_{U} that are set for each of secondary batteries 1₁ to 1_{N} are the same, the first threshold SOC_{L} and the second threshold SOC_{U} that are set for each of secondary batteries 1₁ to 1_{N} may be different from each other. In this case, likewise, in the order that the values of the SOCs of secondary batteries secondary batteries 1₁ to 1_{N} have reached the first threshold SOC_{L}, they can be successively charged from the first threshold SOC_{L} to the second threshold SOC_{U}. Likewise, in the order that the values of the SOCs of secondary batteries secondary batteries 11 to 1N have reached the second threshold SOC_{U}, they can be successfully discharged from the second threshold SOC_{U} to the first threshold SOC_{L}.

According to this exemplary embodiment, although the charging and discharging method between the first threshold SOC_{L} and the second threshold SOC_{U} is not restricted, however, while secondary batteries 1₁ to 1_{N} are being charged from the first threshold SOC_{L} to the second threshold SOC_{U}, the charging speed can be increased by increasing the charging current and charging voltage in the allowable range of secondary batteries 1₁ to 1_{N}. Likewise, while secondary batteries 1₁ to 1_{N} are being discharged from the second threshold SOC_{U} to the first threshold SOC_{L}, the discharging speed can be increased by increasing current that flows in a load in the allowable range of secondary batteries 1₁ to 1_{N}. The charging current and charging voltage can be controlled by the above-described charging device manufactured according to the performance and characteristic of secondary batteries 1₁ to 1_{N}. On the other hand, when information processing device 3 and the above-described type of heat pump hot water supplier are connected through an information communication means and the hot water supplier can be controlled by information processing device 3, the load current can be increased by operating the hot water supplier. The information communication means may be a known wireless communication means or a known wired communication means.

Next, with reference to drawings, the charging and discharging method for the lithium ion secondary batteries according to this exemplary embodiment will be described.

Fig. 5 is a flow chart exemplifying a charging procedure of the charging and discharging method based on which the lithium ion secondary batteries are charged according to the first exemplary embodiment, whereas Fig. 6 is a flow chart exemplifying a discharging procedure of the charging and discharging method based on which the lithium ion secondary batteries are discharged according to the first exemplary embodiment.

Fig. 5 and Fig. 6 show that the value of the SOC of i-th (where i = 1, 2, ... , N) secondary battery 1ᵢ of N secondary batteries 1₁ to 1_{N} is denoted by SOCᵢ and that switch 4ᵢ provided corresponding to i-th secondary battery 1ᵢ is denoted by SWᵢ. i may be assigned to any secondary battery and may switch as the process proceeds instead of having been assigned thereto so as to identifying them.

The processes shown in Fig. 5 and Fig. 6 are executed by processing device 10 of information processing device 3 shown in Fig. 1 and Fig. 2.

As shown in Fig. 5, processing device 10 charges secondary batteries 1₁ to 1_{N} such that it turns on all SW₁ to SW_{N}, obtains the value of the SOC of i-th (i = 1) secondary battery 1₁, SOCᵢ, from monitor device 2 (at step A1), and compares the SOCᵢ with the preset second threshold SOC_{U} (at step A2).

If the obtained SOCᵢ is equal to or greater than the second threshold SOC_{U}, processing device 10 determines whether or not the value of i is N (at step A3). Unless the value of i is N, processing device 10 turns off SWᵢ corresponding to the value of i, increments the value of i by "1" (at step A4), and repeats the process from step A1. If the value of i is N, processing device 10 advances to the process at step A13 that will be described later.

After the process from steps A₁ to A₄ is completed, only switches corresponding to secondary batteries in which the values of their SOCs have not reached the second threshold SOC_{U} are turned on (charging targets). In this example, it is assumed that the number of these switches is denoted by N - j + 1. In other words, the values of the SOCs of (j - 1) secondary batteries have reached the second threshold SOC_{U},

Processing device 10 simultaneously charges these target secondary batteries. At this point, while processing device 10 charges these target secondary batteries, it successively obtains the values of the SOCs of secondary batteries 1ⱼ to 1_{N} from monitor device 2.

After processing device 10 obtains the value of the SOC of i-th secondary battery 1ᵢ, SOCᵢ (at step A5), it compares the SOCᵢ with the preset first threshold SOC_{L} (at step A6).

If the obtained SOCᵢ is equal to or less than the first threshold SOC_{L}, processing device 10 determines whether or not the value of i is N (at step A7). Unless the value of i is N, processing device 10 increments the value of i by "1" (at step A8) and repeats the process from step A6. If the value of i is N, processing device 10 advances to the process at step A13 that will be described later.

If the obtained SOCᵢ is greater than the first threshold SOC_{L}, processing device 10 turns off all SWᵢ (i = j + 1, ... , N) corresponding to the other target secondary batteries other than i-th secondary battery 1ᵢ (at step A9).

Thereafter, processing device 10 compares the SOCᵢ with the preset second threshold SOC_{U} (at step A10). If the SOCᵢ is equal to or less than the second threshold SOC_{U}, processing device 10 repeats the process at step A10. If the SOCᵢ is greater than the second threshold SOC_{U}, processing device 10 determines whether or not the value of i is N (at step A11). Unless the value of i is N, processing device 10 turns on SW_{i + 1} corresponding to (i + 1)-th secondary battery 1_{i + 1} and then turns off SWᵢ corresponding to i-th secondary battery 1ᵢ. Thereafter, processing device 10 increments the value of i by "1" (at step A12).

If the value of i is N in the process at step A11, processing device 10 turns on all switches SWᵢ to SW_{N - 1} corresponding to the other charging target secondary batteries other than switch SW_{N} corresponding to N-th secondary battery 1_{N} (at step A13) and continues the charging operation (at step A14). The charging operation can be continued until the values of the SOCs of all secondary batteries 1₁ to 1_{N} reach the maximum SOC.

As shown in Fig. 6, processing device 10 discharges individual secondary batteries 1₁ to 1_{N} such that it turns on all SW₁ to SW_{N}, obtains the value of the SOC of i-th (i = 1) secondary battery 1ᵢ, SOCᵢ, from monitor device 2 (at step B1) and compares the SOCᵢ with the preset first threshold SOC_{L} (at step B2).

If the obtained SOCᵢ is equal to or less than the first threshold SOC_{L}, processing device 10 determines whether or not the value of i is N (at step B3). Unless the value of i is N, processing device 10 turns off SWᵢ corresponding to the value of i, increments the value of i by "1" (at step B4), and repeats the process from step B1. If the value of i is N, processing device 10 advances to the process at step B 13.

After the process from steps B 1 to B4 is completed, only switches corresponding to secondary batteries in which the values of their SOCs have not reached the first threshold SOC_{L} are turned on (discharging targets). In this example, it is assumed that the number of these target secondary batteries is denoted by N - j + 1. In other words, the values of the SOCs of (j - 1) secondary batteries have reached the first threshold SOC_{L}.

Processing device 10 simultaneously discharges these discharging target secondary batteries. At this point, while processing device 10 discharges these discharging target secondary batteries, it successively obtains the values of the SOCs of secondary batteries 1ⱼ to 1_{N} from monitor device 2.

After processing device 10 obtains the value of the SOC of i-th secondary battery 1ᵢ, SOCᵢ, (at step B5), processing device 10 compares the SOCᵢ with the preset second threshold SOC_{U} (at step B6).

If the obtained SOCᵢ is equal to or greater than the second threshold SOC_{U}, processing device 10 determines whether or not the value of i is N (at step B7). Unless the value of i is N, processing device 10 increments the value of i by "1" (at step B8) and repeats the process from step B6. If the value of i is N, processing device 10 advances to the process at step B 13 that will be described later.

If the obtained SOCᵢ is greater than the second threshold SOC_{U}, processing device 10 turns off all SWᵢ (i = j + 1, ... , N) corresponding to the other discharging target secondary batteries other than i-th secondary battery 1ᵢ (at step B9).

Thereafter, processing device 10 compares the SOCᵢ with the preset first threshold SOC_{L} (at step B10). If the SOCᵢ is equal to or less than the first threshold SOC_{L}, processing device 10 repeats the process at step B10. If the SOCᵢ is greater than the first threshold SOC_{L}, processing device 10 determines whether or not the value of i is N (at step B11). Unless the value of i is N, processing device 10 turns on SW_{i + 1} corresponding to (i + 1)-th secondary battery 1_{i + 1} and then turns off SWᵢ corresponding to i-th secondary battery 1ᵢ. Thereafter, processing device 10 increments the value of i by "1" (at step B12).

If the value of i is N in the process at step B11, processing device 10 turns on all SWᵢ to SW_{N - 1} corresponding to the other discharging target secondary batteries other than switch SW_{N} corresponding to N-th secondary battery 1_{N} (at step B13) and then continues the discharging operation (at step B14). The discharging operation can be continued until the values of the SOCs of all secondary batteries 1₁ to 1_{N} reach the minimum SOC.

Fig. 5 and Fig. 6 described above exemplify processes in which monitor device 2 is provided with N detectors and can independently obtain the values of the SOCs of N secondary batteries 1₁ to 1_{N}.

In contrast, Fig. 7 and Fig. 8 exemplify processes in which monitor device 2 is provided with one detector that detects the values of the SOCs of individual secondary batteries 1₁ to 1_{N}.

Fig. 7 is a flow chart further exemplifying the charging procedure of the charging and discharging method based on which the lithium ion secondary batteries are charged according to the first exemplary embodiment, whereas Fig. 8 is a flow chart further exemplifying the discharging procedure of the charging and discharging method based on which the lithium ion secondary batteries are discharged according to the first exemplary embodiment.

Fig. 7 and Fig. 8 show that the value of the SOC of i-th (i = 1, 2, .... , N) secondary battery 1ᵢ ofN secondary batteries 1₁ to 1_{N} is denoted by SOCᵢ and that switch 4ᵢ provided corresponding to i-th secondary battery 1ᵢ is denoted by SWᵢ. i may be assigned to any secondary battery and may switch as the process proceeds instead of having been assigned thereto so as to identify them.

The processes shown in Fig. 7 and Fig. 8 are executed by processing device 10 of information processing device 3 shown in Fig. 1 and Fig. 2.

As shown in Fig. 7, processing device 10 charges secondary batteries 1₁ to 1_{N} such that it turns on SWᵢ corresponding to i-th (i = 1) secondary battery 1ᵢ and turns off other SWᵢ (i = 2, 3, ... , N) other than SWᵢ (i = 1) (at step C1).

Thereafter, processing device 10 obtains the value of the SOC of i-th secondary battery 1ᵢ, SOCᵢ, and compares the SOCᵢ with the preset second threshold SOC_{U} (at step C2). If the obtained SOCᵢ is equal to or less than the second threshold SOC_{U}, processing device 10 repeats the process at step C2. At this point, secondary battery 1ᵢ is continuously charged until the value of the SOC exceeds the first threshold SOC_{L} and reaches the second threshold SOC_{U}.

If the obtained SOCᵢ is greater than the second threshold SOC_{U}, processing device 10 determines whether or not the value of i is N (at step C3). Unless the value of i is N, processing device 10 turns on SW_{i + 1} corresponding to (i + 1)-th secondary battery 1_{i + 1} and then turns off SWᵢ corresponding to i-th secondary battery 1ᵢ. Thereafter, processing device 10 increments the value of i by "1" (at step C4) and then repeats the process from step C2.

If the value of i is N, processing device 10 turns on all SWᵢ to SW_{N - 1} other than switch SW_{N} corresponding to N-th secondary battery 1_{N} (at step C5) and continues charging (at step C6). The charging operation can be continued until the values of the SOCs of all secondary batteries 1₁ to 1_{N} reach the maximum SOC.

As shown in Fig. 8, processing device 10 discharges individual secondary batteries 1₁ to 1_{N} such that it turns on SWᵢ corresponding to i-th (i = 1) secondary battery 1ᵢ and then turns off other SWᵢ (i = 2, 3, ... , N) other than the SWᵢ (i = 1) (at step D1).

Thereafter, processing device 10 obtains the value of the SOC of i-th secondary battery 1ᵢ, SOCᵢ, from monitor device 2 and then compares the SOCᵢ with the preset first threshold SOC_{L} (at step D2). If the obtained SOCᵢ is equal to or greater than the first threshold SOC_{L}, processing device 10 repeats the process at step D2. At this point, secondary battery 1ᵢ is continuously discharged until the value of the SOC becomes less than the second threshold SOC_{U} and reaches the first threshold SOC_{L}.

If the obtained SOCᵢ is less than the first threshold SOC_{L}, processing device 10 determines whether or not the value of i is N (at step D3). Unless the value of i is N, processing device 10 turns on SW_{i + 1} corresponding to (i + 1)-th secondary battery 1_{i + 1} and then turns off SWᵢ corresponding to i-th secondary battery 1ᵢ. Thereafter, processing device 10 increments the value of i by "1" (at step D4) and then repeats the process from step D2.

If the value of i is N, processing device 10 turns on all SWᵢ to SW_{N - 1} other than switch SW_{N} corresponding to N-th secondary battery 1_{N} (at step D5) and continues discharging (at step D6). The discharging operation can be continued until the values of the SOCs of all secondary batteries 1₁ to 1_{N} reach the minimum SOC.

According to this exemplary embodiment, since the charging operation is continued for secondary batteries in which the values of their SOCs have reached the first threshold SOC_{L} until they reach the second threshold SOC_{U} and the discharging operation is continued for secondary batteries 1₁ to 1_{N} in which the values of their SOCs have reached the second threshold SOC_{U} until they reach the first threshold SOC_{L}, individual secondary batteries 1₁ to 1_{N} do not stop the charging operation or discharging operation in their progressively deteriorating SOC_{d}. Thus, when stored, a reduction in the product life cycle of manganese lithium ion secondary batteries 1₁ to 1_{N} can be prevented from shortening.

In the above description, although it is assumed that the progressively deteriorating SOC_{d} of individual secondary batteries 1₁ to 1_{N} is constant, it may vary depending on the operation times and the numbers of charging and discharging times of secondary batteries 1₁ to 1_{N}. Thus, the above-described first threshold SOC_{L} and second threshold SOC_{U} may be changed depending on the operation times and the numbers of charging and discharging times.

### (Second Exemplary Embodiment)

Fig. 9 is a block diagram exemplifying a structure of a charging and discharging system according to a second exemplary embodiment.

The first exemplary embodiment exemplified that a plurality of secondary batteries 1₁ to 1_{N} connected in parallel are controlled such that the charging operation or discharging operation does not stop in the progressively deteriorating SOC_{d}. In contrast, the second exemplary embodiment exemplifies that one secondary battery 1 is controlled such that the charging operation or discharging operation does not stop in the progressively deteriorating SOC_{d}.

As shown in Fig. 9, the charging and discharging system of the second exemplary embodiment is different from that of the first exemplary embodiment in that the number of control target secondary batteries is one. In addition, an information processing device of the second exemplary embodiment is connected for example to a type of heat pump hot water supplier through an information communication means and the hot water supplier can be controlled by the information processing device. Since the structure of the other sections of the charging and discharging system of the second exemplary embodiment is the same as that of the first exemplary embodiment, description will be omitted.

The information communication means may be a known wireless communication means or a known wired communication means. The wireless communication means can be understood to be a known Zigbee wireless system that uses for example a 950 MHz band radio frequency. The wired communication means can be considered appropriate for a known PLC (Power Line Communication) system that transmits and receives information using for example electric wires.

The charging and discharging system according to the second exemplary embodiment controls switch 4 such that the charging operation is continued from the first threshold SOC_{L} to the second threshold SOC_{U} based on the value of the SOC of secondary battery 1 and that the discharging operation is continued from the second threshold SOC_{U} to the first threshold SOC_{L}. based on the value of the SOC of secondary battery 1.

For example, when secondary battery 1 is charged with electric power generated by a renewable power supply such as a solar battery, if the value of the SOC of secondary battery 1 is the progressively deteriorating SOC_{d}, it is likely that the electric power of the renewable power supply will stop and thereby the charging operation will stop. In such a case, information processing device 3 of this exemplary embodiment will continue the charging operation for secondary battery 1 with electric power being supplied from the electric power company through the power distribution system.

On the other hand, when secondary battery 1 is discharged, since the operations of all electric devices as loads stop, the likelihood that the discharging operation will stop when the value of the SOC of secondary battery 1 is the progressively deteriorating SOC_{d} cannot be denied. In such a case, information processing device 3 of this exemplary embodiment operates the above-described type of heat pump hot water supplier so as to continue the discharging operation of secondary battery 1 and thereby prevents the discharging operation of secondary battery 1 from stopping in the progressively deteriorating SOC_{d}.

A secondary battery that is being charged is equivalent to an electric device that is consuming electric power viewed from other secondary batteries. Thus, if there is a secondary battery that is not contained in the charging and discharging system of this exemplary embodiment (external secondary battery), the discharging operation for secondary battery 1 can be continued such that the external secondary battery is charged. If the discharging operation of secondary battery 1 stops in the progressively deteriorating SOC_{d}, information processing device 3 can prevent secondary battery 1 from entering the progressively deteriorating SOC_{d} in such a manner that information processing device 3 causes secondary battery 1 to be charged with electric power supplied from the power distribution system.

The methods of this exemplary embodiment in which the charging operation is continued by changing the charging electric power supply source and in which the charging operation is continued by operating a certain type of heat pump hot water supplier can be combined with the charging and discharging system of the first exemplary embodiment.

According to the second exemplary embodiment, the charging operation or discharging operation does not stop when secondary battery I enters the progressively deteriorating SOC_{d}. Thus, like the first exemplary embodiment, when manganese lithium ion secondary battery 1 is stored, a reduction in the product life cycle can be prevented from shortening.

Now, with reference to the exemplary embodiments, the present invention has been described. However, it should be understood by those skilled in the art that the structure and details of the present invention may be changed in various manners without departing from the scope of the present invention.

The present application claims priority based on Japanese Patent Application No. 2010-066107 filed on March 23, 2010, the entire contents of which are incorporated herein by reference in its entirety.

## Claims

1. A charging and discharging method for lithium ion secondary batteries, the method comprising the steps of:
causing a computer to store a preset first threshold that is lower than a progressively deteriorating SOC that is an SOC in which battery performance of said lithium ion secondary battery deteriorates when the lithium ion secondary battery is stored and to store a preset second threshold that is greater than said progressively deteriorating SOC;
causing said computer to control a switch provided between electric wires and said lithium ion secondary battery, an electric power supply source that supplies electric power necessary to charge said lithium ion secondary battery and a load that consumes electric power discharged from said lithium ion secondary battery that is connected to said electric wires, such that a charging operation for said lithium ion secondary battery is continued from said first threshold to said second threshold when said lithium ion secondary battery is charged based on a value of the SOC of said lithium ion secondary battery, the value of the SOC being transmitted from a monitor device that detects the value of the SOC of said lithium ion secondary battery; and
causing said computer to control said switch such that a discharging operation for said lithium ion secondary battery is continued from said second threshold to said first threshold when said lithium ion secondary battery is discharged;
wherein said computer controls said charging operation and/or discharging operation for said lithium ion secondary battery.

2. The charging and discharging method for lithium ion secondary batteries according to claim 1, wherein the lithium ion secondary batteries have a manganese positive electrode material.

3. The charging and discharging method for lithium ion secondary batteries according to claim 1 or 2,
wherein the monitor device (2) detects the output voltage values of said lithium ion secondary battery as the value of the SOC,
the first threshold and the second threshold are varied depending on the operation times and the numbers of charging and discharging times of said lithium ion secondary battery, and
while said lithium ion secondary battery is being charged from the first threshold to the second threshold, the charging current and charging voltage is higher than the charging current and charging voltage for said lithium ion secondary battery in another SOC, and while said lithium ion secondary battery is being discharged from the second threshold to the first threshold, the current that flows in a load is higher than the current that flows in a load for said lithium ion secondary battery in another SOC.

4. The charging and discharging method for lithium ion secondary batteries according to any one of claims 1 to 3,
wherein when said plurality of lithium ion secondary batteries are charged, the first control step is performed by causing said computer to control said plurality of switches provided corresponding to said lithium ion secondary batteries such that said lithium ion secondary batteries that have reached said first threshold are successively charged from said first threshold to said second threshold, and
wherein when said plurality of lithium ion secondary batteries are discharged, the second control step is performed by causing said computer to control said switches provided corresponding to said lithium ion secondary batteries such that said lithium ion secondary batteries that have reached said second threshold are successively discharged from said second threshold to said first threshold.

5. The charging and discharging method for lithium ion secondary batteries according to any one of claims 1 to 4,
wherein when the values of the SOC of said lithium ion secondary batteries have reached the first threshold, individual lithium ion secondary batteries are successively charged from the first threshold to the second threshold and when the values of the SOC of said lithium ion secondary batteries have reached the second threshold, individual lithium ion secondary batteries are successively discharged from the second threshold to the first threshold,
when the lithium ion secondary batteries are charged, they are simultaneously charged from the minimum SOC to the first threshold, and they are simultaneously charged from the second threshold to the maximum SOC and when said lithium ion secondary batteries are discharged, they are simultaneously discharged from the maximum SOC to the second threshold, and they are simultaneously discharged from the first threshold to the minimum SOC,
when the values of the SOCs of said lithium ion secondary batteries have reached the first threshold, they are successively charged from the first threshold to the second threshold and when the values of the SOCs of said lithium ion secondary batteries have reached the second threshold, they are successively discharged from the second threshold to the first threshold,
the first threshold, the second threshold and the progressively deteriorating SOC that are set for each of said lithium ion secondary batteries are different from each other, and
when the charging operation for the lithium ion secondary battery is continued in the progressively deteriorating SOC, the computer will continue the charging operation for the lithium ion secondary battery with electric power being supplied from the power distribution system.

6. The charging and discharging method for lithium ion secondary batteries according to any one of claims 1 to 5,
wherein said positive electrode material of said lithium ion secondary batteries is mainly lithium manganese oxide.

7. A charging and discharging system that controls charging and discharging for lithium ion secondary batteries, comprising:
a monitor device that detects SOCs of said lithium ion secondary batteries;
switches that connect or disconnect electric wires and said lithium ion secondary batteries, a power supply source that supplies electric power necessary to charge said lithium ion secondary batteries and a load that consumes electric power discharged from said lithium ion secondary batteries that are connected to said electric wires; and
an information processing device that stores a preset first threshold that is lower than a progressively deteriorating SOC that is an SOC in which battery performance of said lithium ion secondary batteries deteriorates when the lithium ion secondary batteries are stored and a preset second threshold that is greater than said progressively deteriorating SOC and that controls said switches such that a charging operation for said lithium ion secondary batteries is continued from said first threshold to said second threshold when said lithium ion secondary batteries are charged and such that a discharging operation for said lithium ion secondary batteries is continued from said second threshold to said first threshold when said lithium ion secondary batteries are discharged based on values of the SOCs of said lithium ion secondary batteries, the values of the SOCs being detected by said monitor device,
wherein said information processing device controls said charging operation and/or discharging operation for said lithium ion secondary battery.

8. The charging and discharging system for lithium ion secondary batteries according to claim 7, wherein the lithium ion secondary batteries have a manganese positive electrode material.

9. The charging and discharging system according to claim 7 or 8,
wherein the monitor device (2) is adapted to detect the output voltage values of said lithium ion secondary battery as the value of the SOC,
the first threshold and the second threshold are varied depending on the operation times and the numbers of charging and discharging times of said lithium ion secondary battery, and
while said lithium ion secondary battery is being charged from the first threshold to the second threshold, the charging current and charging voltage is higher than the charging current and charging voltage for said lithium ion secondary battery in another SOC, and while said lithium ion secondary battery is being discharged from the second threshold to the first threshold, the current that flows in a load is higher than the current that flows in a load for said lithium ion secondary battery in another SOC.

10. The charging and discharging system according to any one of claims 7 to 9,
wherein said switches are provided corresponding to said lithium ion secondary batteries,
wherein when said plurality of lithium ion secondary batteries are charged, said information processing device controls said switches such that said lithium ion secondary batteries that have reached said first threshold are successively charged from said first threshold to said second threshold, and
wherein when said plurality of lithium ion secondary batteries are discharged, said information processing device controls said switches such that said lithium ion secondary batteries that have reached said second threshold are successively discharged from said second threshold to said first threshold.

11. The charging and discharging system according to any one of claims 7 to 10,
wherein when the values of the SOC of said lithium ion secondary batteries have reached the first threshold, individual lithium ion secondary batteries are successively charged from the first threshold to the second threshold and when the values of the SOC of said lithium ion secondary batteries have reached the second threshold, individual lithium ion secondary batteries are successively discharged from the second threshold to the first threshold,
when the lithium ion secondary batteries are charged, they are simultaneously charged from the minimum SOC to the first threshold, and they are simultaneously charged from the second threshold to the maximum SOC and when said lithium ion secondary batteries are discharged, they are simultaneously discharged from the maximum SOC to the second threshold, and they are simultaneously discharged from the first threshold to the minimum SOC,
when the values of the SOCs of said lithium ion secondary batteries have reached the first threshold, they are successively charged from the first threshold to the second threshold and when the values of the SOCs of said lithium ion secondary batteries have reached the second threshold, they are successively discharged from the second threshold to the first threshold,
the first threshold, the second threshold and the progressively deteriorating SOC that are set for each of said lithium ion secondary batteries are different from each other, and
when the charging operation for the lithium ion secondary battery is continued in the progressively deteriorating SOC, the computer is adapted to continue the charging operation for the lithium ion secondary battery with electric power being supplied from the power distribution system.

12. The charging and discharging system according to any one of claims 7 to 11,
wherein said positive electrode material of said lithium ion secondary batteries is mainly lithium manganese oxide.

13. An information processing device that controls charging and discharging for lithium ion secondary batteries, comprising:
a storage device that stores a preset first threshold that is lower than a progressively deteriorating SOC that is an SOC in which battery performance of the lithium ion secondary batteries deteriorates when the lithium ion secondary batteries are stored and that stores a preset second threshold that is greater than said progressively deteriorating SOC; and
a processing device that controls switches provided between electric wires and said lithium ion secondary batteries, an electric power supply source that supplies electric power necessary to charge said lithium ion secondary batteries and a load that consumes electric power discharged from said lithium ion secondary batteries that are connected to said electric wires, such that a charging operation for said lithium ion secondary batteries is continued from said first threshold to said second threshold when said lithium ion secondary batteries are charged and such that a discharging operation for said lithium ion secondary batteries is continued from said second threshold to said first threshold when said lithium ion secondary batteries are discharged based on values of the SOCs of said lithium ion secondary batteries, the values of the SOCs being transmitted from a monitor device that detects the values of the SOCs of said lithium ion secondary batteries;
wherein said processing device controls said charging operation and/or discharging operation for said lithium ion secondary battery.

14. The information processing device according to claim 13, wherein the lithium ion secondary batteries have a manganese positive electrode material.

15. The information processing device according to claim 13 or 14,
wherein the monitor device (2) is adapted to detect the output voltage values of said lithium ion secondary battery as the value of the SOC,
the first threshold and the second threshold are varied depending on the operation times and the numbers of charging and discharging times of said lithium ion secondary battery, and
while said lithium ion secondary battery is being charged from the first threshold to the second threshold, the charging current and charging voltage is higher than the charging current and charging voltage for said lithium ion secondary battery in another SOC, and while said lithium ion secondary battery is being discharged from the second threshold to the first threshold, the current that flows in a load is higher than the current that flows in a load for said lithium ion secondary battery in another SOC.

16. The information processing device according to any one of claims 13 to 15,
wherein when said plurality of lithium ion secondary batteries are charged, said information processing device controls said switches provided corresponding to said lithium ion secondary batteries such that said lithium ion secondary batteries that have reached said first threshold are successively charged from said first threshold to said second threshold, and
wherein when said plurality of lithium ion secondary batteries are discharged, said information processing device controls said switches provided corresponding to said lithium ion secondary batteries such that said lithium ion secondary batteries that have reached said second threshold are successively discharged from said second threshold to said first threshold.

17. The information processing device according to any one of claims 13 to 16,
wherein when the values of the SOC of said lithium ion secondary batteries have reached the first threshold, individual lithium ion secondary batteries are successively charged from the first threshold to the second threshold and when the values of the SOC of said lithium ion secondary batteries have reached the second threshold, individual lithium ion secondary batteries are successively discharged from the second threshold to the first threshold,
when the lithium ion secondary batteries are charged, they are simultaneously charged from the minimum SOC to the first threshold, and they are simultaneously charged from the second threshold to the maximum SOC and when said lithium ion secondary batteries are discharged, they are simultaneously discharged from the maximum SOC to the second threshold, and they are simultaneously discharged from the first threshold to the minimum SOC,
when the values of the SOCs of said lithium ion secondary batteries have reached the first threshold, they are successively charged from the first threshold to the second threshold and when the values of the SOCs of said lithium ion secondary batteries have reached the second threshold, they are successively discharged from the second threshold to the first threshold,
the first threshold, the second threshold and the progressively deteriorating SOC that are set for each of said lithium ion secondary batteries are different from each other, and
when the charging operation for the lithium ion secondary battery is continued in the progressively deteriorating SOC, the computer is adapted to continue the charging operation for the lithium ion secondary battery with electric power being supplied from the power distribution system.

18. The information processing device according to any one of claims 13 to 17,
wherein said positive electrode material of said lithium ion secondary batteries is mainly lithium manganese oxide.
